# EUROPEAN PATENT APPLICATION

(11) **EP 4 465 293 A1**
(43) Date of publication of application: **20.11.2024**
(21) Application number: 24171251.2
(22) Date of filing: 19.04.2024
(51) Int. Cl.: G10L 15/16, G10L 15/02, G06N 3/045

(54) **AUTOMATIC SPEECH RECOGNITION WITH COMBINED SPEECH-TEXT-EMBEDDINGS**

(30) Priority: 17.05.2023 US 202363502787 P
(71) Applicant: GOOGLE LLC, Mountain View CA 94043 (US)
(72) Inventor: WANG, Mingqiu, Mountain View, 94043 (US); SOLTAU, Hagen, Mountain View, 94043 (US); SHAFRAN, Izhak, Mountain View, 94043 (US)
(74) Representative: Varley, James Richard

(57) **Abstract**

Methods and systems for recognizing speech are disclosed herein. A computer-implemented method for recognizing speech. The method includes performing blank filtering on a received speech input to generate a plurality of filtered encodings and processing the plurality of filtered encodings to generate a plurality of audio embeddings. The method also includes mapping each audio embedding of the plurality of audio embeddings to a textual embedding using a speech adapter to generate a plurality of combined embeddings and providing the plurality of combined embeddings to a machine-learned model. The method further includes receiving, by the processor, a textual output from the machine-learned model.

## Description

### FIELD

The present disclosure relates generally to speech understanding using large language models. More particularly, the present disclosure relates to a joint speech and language model that maps speech to text token embedding space without observable loss of speech information.

### BACKGROUND

Large language models ("LLMs") are used to understand text and generate embeddings based on the understood text. There have been efforts to extend the capabilities of LLMs from text to other modalities, such as speech. Current efforts attempt to map speech and text to the same latent representations using a shared encoder, which suffers from the fact that the shared encoder cannot leverage pre-trained speech and language encoders and therefore requires additional amounts of further training for both speech and language.

In most practical spoken language systems, speech input is recognized using an automatic speech recognition ("ASR") and the recognized transcripts are fed into other systems that utilize LLMs. This cascaded approach does not offer an opportunity to correct potential ASR misrecognitions. Furthermore, these systems are weak in processing domain-specific entities not well represented in the training data used to train these systems.

### SUMMARY

Aspects and advantages of embodiments of the present disclosure will be set forth in part in the following description, or can be learned from the description, or can be learned through practice of the embodiments.

One example aspect of the present disclosure is directed to a computer-implemented method for recognizing speech. The method includes performing, by a processor, blank filtering on a received speech input to generate a plurality of filtered encodings and processing, by the processor, the plurality of filtered encodings to generate a plurality of audio embeddings. The method also includes mapping, by the processor, each audio embedding of the plurality of audio embeddings to a textual embedding using a speech adapter to generate a plurality of combined embeddings and providing, by the processor, the plurality of combined embeddings to a machine-learned model. The method further includes receiving, by the processor, a textual output from the machine-learned model.

Another example aspect of the present disclosure is directed to a computing system for recognizing speech. The computing system can include one or more processors and a non-transitory, computer-readable medium comprising instructions that, when executed by the one or more processors, cause the one or more processors to perform operations. The operations can include performing blank filtering on a received speech input to generate a plurality of filtered encodings and processing the plurality of filtered encodings to generate a plurality of audio embeddings. The operations can also include mapping each audio embedding of the plurality of audio embeddings to a textual embedding using a speech adapter; to generate a plurality of combined encodings and receiving one or more specific textual embeddings from a domain-specific entity retriever based on the plurality of filtered encodings. The operations can further include providing the plurality of combined embeddings and the one or more specific textual embeddings to a machine-learned model and receiving a textual output representing speech from the speech input from the machine-learned model.

Another example aspect of the present disclosure is directed to a non-transitory, computer-readable medium comprising instructions that, when executed by one or more processors, cause the one or more processors to perform operations. The operations can include performing blank filtering on a received speech input to generate a plurality of filtered encodings and processing the plurality of filtered encodings to generate a plurality of audio embeddings. The operations can also include mapping each audio embedding of the plurality of audio embeddings to a textual embedding using a speech adapter to generate a plurality of combined embeddings and receiving one or more specific textual embeddings from a domain-specific entity retriever based on the plurality of filtered encodings. The operations can further include providing the plurality of combined embeddings and the one or more specific textual embeddings to a machine-learned model and receiving a textual output representing speech from the speech input from the machine-learned model.

Other aspects of the present disclosure are directed to various systems, apparatuses, non-transitory computer-readable media, user interfaces, and electronic devices.

These and other features, aspects, and advantages of various embodiments of the present disclosure will become better understood with reference to the following description and appended claims. The accompanying drawings, which are incorporated in and constitute a part of this specification, illustrate example embodiments of the present disclosure and, together with the description, serve to explain the related principles.

### BRIEF DESCRIPTION OF THE DRAWINGS

Detailed discussion of embodiments directed to one of ordinary skill in the art is set forth in the specification, which makes reference to the appended figures, in which:
Figure 1 depicts a block diagram of an example speech recognition model (SLM) according to example embodiments of the present disclosure
Figure 2 depicts dialog tracking using an SLM according to example embodiments of the present disclosure.
Figure 3 depicts a flow chart diagram of an example method to perform speech recognition according to example embodiments of the present disclosure.
Figure 4A depicts a block diagram of an example computing system that performs speech recognition according to example embodiments of the present disclosure.
Figure 4B depicts a block diagram of an example computing device that performs speech recognition according to example embodiments of the present disclosure.
Figure 4C depicts a block diagram of an example computing device that performs speech recognition according to example embodiments of the present disclosure.

Reference numerals that are repeated across plural figures are intended to identify the same features in various implementations.

### DETAILED DESCRIPTION

### Overview

Generally, the present disclosure is directed to a joint speech and language model ("SLM") that maps speech into a text token embedding spaces without speech information loss. This is accomplished by utilizing blank filtering, which is a technique that is used to reduce speech data sequence length to the same order of magnitude as the text token embedding space. The present disclosure also includes a domain-specific retriever to augment the SLM by performing domain-specific retrieval tasks for corner cases that the LLM may not properly handle, such as names for towns or cities, family names, and other unique words that may not be captured in a general LLM.

The speech understanding task requires a model that can simultaneously recognize speech inputs and understand the semantic meaning of the corresponding language. Combining a speech encoder with an LLM helps to enable this process. The speech encoder can be based on a connectionist temporal classification model that can be trained separately from other described models. The blank frames (or frames having a low probability of any spoken words) can be filtered out using a variety of filtering techniques. The resulting filtered frames (e.g., only frames containing speech) therefore only provide semantic relevant information from the speech input to the speech encoder, which makes fine-tuning the model easier. Furthermore, reducing the length of the speech input helps with the j oint modeling of the speech input and text sequences, because otherwise the speech input is much larger than the text sequence.

A connectionist temporal classification ("CTC") model can be used as a base for the speech encoder for blank filtering. A CTC model is a type of neural network output for training neural networks to handle sequence problems with variable timing. The input is a sequence (e.g., the speech input) and the output is a sequence of labels for each frame of the input sequence, such as "speech" or "blank." The speech encoder can filter out blank frames from the speech input, leaving only a sequence of non-blank frames. The speech encoder can then generate encodings for the remaining non-blank frames.

The present disclosure can also include a speech adapter, which is a model that includes one or more self-attention layers. The speech adapter can map the filtered encodings to text token embeddings within the pre-trained LLM. The text token embeddings can be embeddings generated from example dialogue text, such as "Hello, how can I help you?" or other similar phrases. The speech adapter can create embeddings that encapsulates any ambiguities in speech and provide these embeddings to the LLM so that relevant information can be extracted using the context and any additional prompts, instead of providing possibly corrupted words from automatic speech recognition.

The speech adapter can be trained using any suitable method for training a speech recognition model, where the input is speech and the output is a corresponding transcript of the speech. In some embodiments, the speech adapter can be trained with the text input being unused and/or with both speech and language model weights being frozen during the training process.

The domain-specific entity retriever's task is to extract a subset of domain-specific entities (such as last names, names of cities, names of restaurants or hotels, or other specific names/language that may not be included in a normal language model) from a list of given domain-specific entities that are relevant to the speech input. The domain-specific entity retriever can include a dual encoder that includes keys that are acoustic encodings (e.g., audio encodings) and values that are the entities mentioned in the speech input. In some embodiments, the domain-specific entity retriever can be trained using a specific set of entities associated with the domain, and in-batch negatives can be used as negative targets during training to optimize a contrastive loss. The keys and values can be encoded separately and, in some embodiments, a cosine distance or other distance measure can be determined between the key and a value to determine a measure of similarity between the key and the value. The domain-specific entity retriever can retrieve a subset of K top candidates that are likely domain-specific entities in the speech input and provide this subset of candidates to the SLM for final analysis and output.

The SLM takes the filtered encodings, the text token embeddings, and the subset of candidates into account for determining the content of the speech input. In some embodiments, the retrieved domain-specific entities can be pre-pended to the original text inputs before processing. The SLM can then use, for example, an encoder-decoder or other machine-learned model to process this group of inputs to determine a final transcript of the speech input.

In some embodiments, the SLM can perform dialog state tracking, but instead of tracking written word, the SLM can track spoken word. Dialog state values can be inferred turn-by-turn in an auto-regressive fashion by providing turn (i) as speech input and illustrating the dialog history from turn (1) to turn (i) as text input. The SLM can simultaneously recognize words spoken in turn (i) along with the dialog states in one output string, and the transcript from each turn can be incrementally collated to create a dialog history for subsequent turns.

The present disclosure provides a number of technical effects and benefits. As one example, the present disclosure provides advantages over conventional approaches by mapping the speech encoding into the text token embedding space without speech information loss. The dual nature of the adapter and the retriever allows for conversion of speech into a textual encoding space useful by the LLM and allows for domain-specific words that may be mishandled by LLMs to be properly integrated into the understanding of the speech.

Additionally, the use of blank filtering allows for the use of only those frames of speech that are semantically relevant to the processing to be used, as well as reducing input speech down in the time scale to a similar length as textual input. Encodings created using blank filtering can then be readily converted to the textual encoding space, which enables easy use of existing LLMs for understanding the content of both speech and text input. Furthermore, the LLM decoder does not need to be trained to obtain the performance gains from the use of the speech adapter, which means that additional training steps to use the output from the speech adapter are unnecessary, thus reducing the number of training cycles (and therefore processing power, memory usage, and/or network bandwidth) that are required to train the model(s).

As another example technical effect and benefit, by using the method of blank filtering, the model can efficiently reduce the length of the speech data sequence to match that of the text token embedding space. This ensures the preservation of speech information during the conversion process, preventing information loss which is often a challenge in speech recognition. Reducing the length of the data sequence can also result in reduced usage of computational resources.

As another example, in some implementations, the model uses a connectionist temporal classification (CTC) model for the speech encoder, filtering out "blank frames" or frames with a low probability of spoken words. This ensures that the resulting encoded speech only contains semantically relevant information, making the model's fine-tuning process easier and more efficient, thereby conserving computational resources.

With reference now to the Figures, example embodiments of the present disclosure will be discussed in further detail.

### Example Model Arrangements

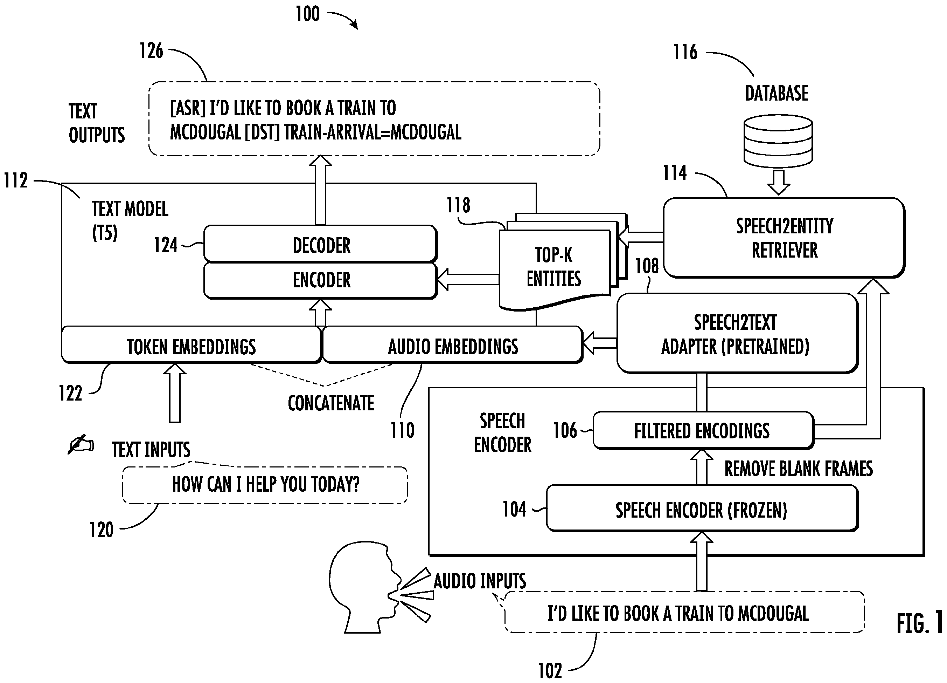

Figure 1 depicts a block diagram of an example speech recognition model (SLM) 100 according to example embodiments of the present disclosure. SLM 100 receives an audio input 102 and provides the audio input to speech encoder 104. Speech encoder 104 performs, among other things, blank filtering on the audio input 102 to generate filtered encodings 106. The filtered encodings are provided to a speech adapter 108, which generates audio embeddings/encodings 110 using the filtered encodings 106, which are provided to LLM 112. The filtered encodings 106 can also be provided to domain-specific entity retriever 114, which identifies domain-specific words in the speech input based on the filtered encodings 106. The domain-specific entity retriever 114 can, in some embodiments, retrieve a subset of domain-specific entities from a database 116 and then provide the subset of domain-specific entities (illustrated as 118) to the LLM 112.

The LLM 112 can also receive text inputs 120 (such as generated prompts) and generate token text embeddings 122, which can be concatenated with audio embeddings 110 as combined embeddings. The combined embeddings and the domain-specific entities 118 can be provided to a machine learned model, represented by encoder/decoder 124, which outputs a textual representation 126 of the audio input 102.

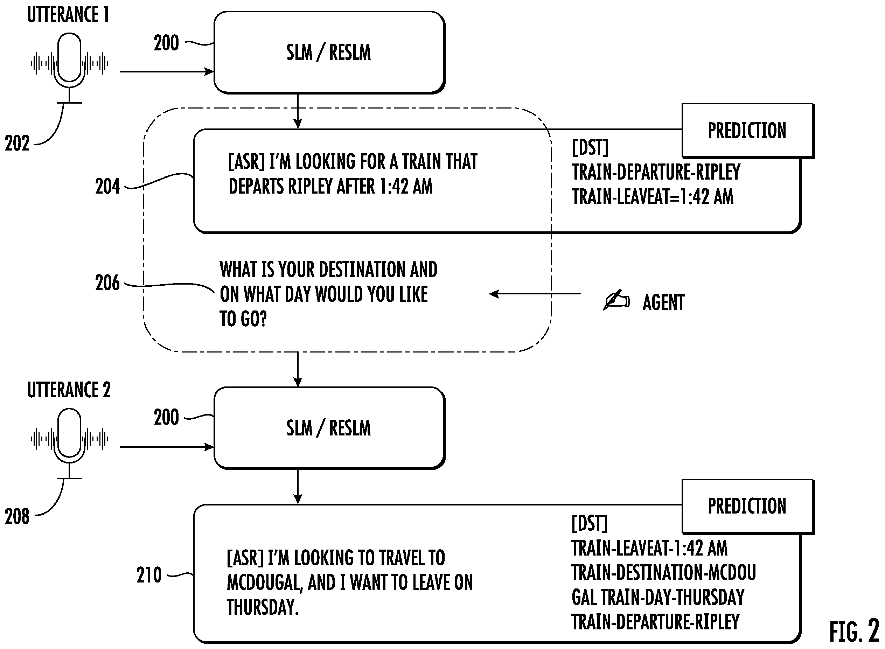

Figure 2 illustrates dialog tracking using an SLM 200 according to example embodiments of the present disclosure. A first utterance 202 is presented to the SLM 200, which processes the first utterance 202 to identify the speech of the first utterance 202, which is output as a first predicted transcript 204. Predicted transcript 204 is then saved as an entry in a dialog history. A prompt 206 from an outside source can be received as part of the dialog and added to the dialog history. A response to the prompt 206, second utterance 208, can then be received and processed by the SLM 200. Similar to the first utterance 202, the second utterance 208 can be processed by the SLM 200 to generate a second predicted transcript 210 based on the dialog history, and the second utterance 208. The second predicted transcript 210 can then be added as another entry to the dialog history.

### Example Methods

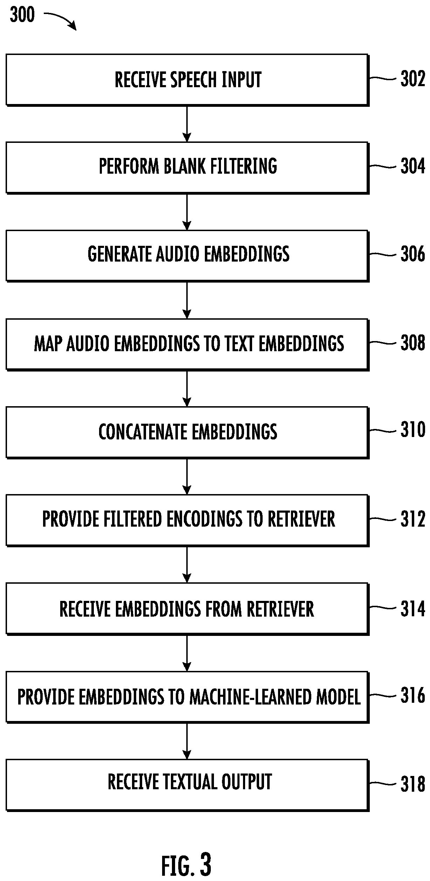

Figure 3 depicts a flow chart diagram of an example method 300 to perform speech recognition according to example embodiments of the present disclosure. Although Figure 3 depicts steps performed in a particular order for purposes of illustration and discussion, the methods of the present disclosure are not limited to the particularly illustrated order or arrangement. The various steps of the method 300 can be omitted, rearranged, combined, and/or adapted in various ways without deviating from the scope of the present disclosure.

At 302, a computing system receives a speech input. The speech input can be received directly from a microphone or from another source, such as a received audio data file.

At 304, the computing system performs blank filtering on the speech input to generate a plurality of filtered encodings. Blank filtering is performed using a CTC model to remove frames of the speech input that do not include actual speech, but instead contain only silence. The resulting output is the plurality of filtered encodings.

At 306, the computing system processes the plurality of filtered encodings to generate a plurality of audio embeddings. A speech adapter receives the filtered encodings and transforms the filtered encodings into audio embeddings in a textual embedding space.

At 308, the computing system maps each audio embedding of the plurality of audio embeddings to a textual embedding using the speech adapter. The textual embeddings the audio embeddings are mapped to can be any textual token embeddings in the textual embedding space of a LLM.

At 310, the computing system concatenates each audio embedding of the plurality of audio embeddings with its respective textual embedding to generate a plurality of combined embeddings. The audio and textual embeddings are combined in the textual embedding space for later processing by the LLM. The audio and textual embeddings are of the same size in order of magnitude, and thus can be more easily processed by the LLM than if the audio embeddings were encoded at their original size.

At 312, the computing system provides the plurality of filtered encodings to a domain-specific entity retriever. The domain-specific entity retriever receives the filtered encodings and determines if any domain-specific entities are similar to the received filtered encodings. The domain-specific entity retriever then returns a subset of specific textual embeddings associated with the domain-specific entities that are deemed to be similar enough one or more of the filtered encodings.

At 314, the computing system receives the one or more specific textual embeddings from the domain-specific entity retriever.

At 316, the computing system provides the plurality of combined embeddings and the one or more specific textual embeddings to a machine-learned model, such as an encoder/decoder model in an LLM.

At 318, the computing system receives a textual output from the machine-learned model. In some implementations, the textual output represents the recognized speech from the LLM based on the combined embeddings and the domain-specific textual embeddings.

### Example Devices and Systems

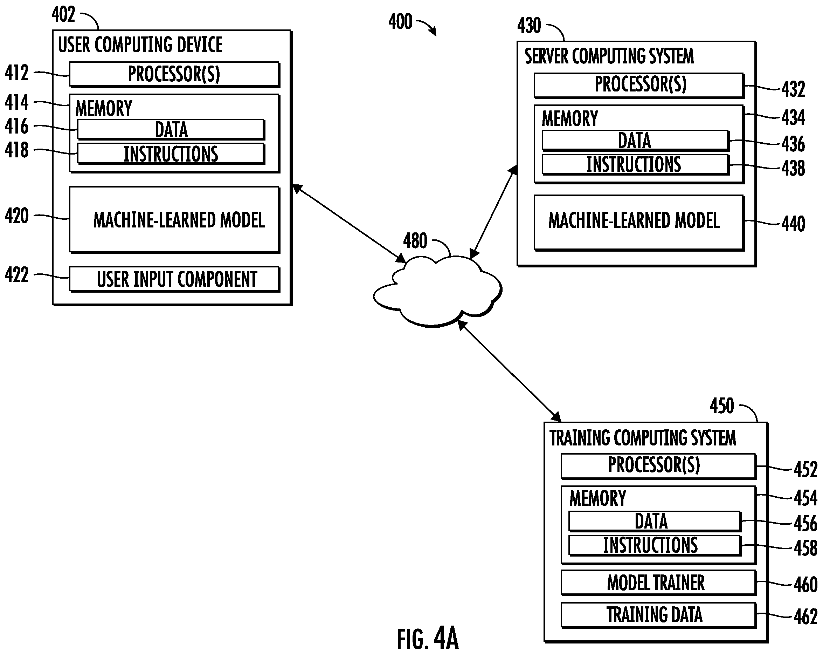

Figure 4A depicts a block diagram of an example computing system 400 that performs speech recognition according to example embodiments of the present disclosure. The system 400 includes a user computing device 402, a server computing system 430, and a training computing system 450 that are communicatively coupled over a network 480.

The user computing device 402 can be any type of computing device, such as, for example, a personal computing device (e.g., laptop or desktop), a mobile computing device (e.g., smartphone or tablet), a gaming console or controller, a wearable computing device, an embedded computing device, or any other type of computing device.

The user computing device 402 includes one or more processors 412 and a memory 414. The one or more processors 412 can be any suitable processing device (e.g., a processor core, a microprocessor, an ASIC, an FPGA, a controller, a microcontroller, etc.) and can be one processor or a plurality of processors that are operatively connected. The memory 414 can include one or more non-transitory computer-readable storage media, such as RAM, ROM, EEPROM, EPROM, flash memory devices, magnetic disks, etc., and combinations thereof. The memory 414 can store data 416 and instructions 418 which are executed by the processor 412 to cause the user computing device 402 to perform operations.

In some implementations, the user computing device 402 can store or include one or more speech recognition models 420. For example, the speech recognition models 420 can be or can otherwise include various machine-learned models such as neural networks (e.g., deep neural networks) or other types of machine-learned models, including non-linear models and/or linear models. Neural networks can include feed-forward neural networks, recurrent neural networks (e.g., long short-term memory recurrent neural networks), convolutional neural networks or other forms of neural networks. Some example machine-learned models can leverage an attention mechanism such as self-attention. For example, some example machine-learned models can include multi-headed self-attention models (e.g., transformer models). Example speech recognition models 420 are discussed with reference to Figures 1-2.

In some implementations, the one or more speech recognition models 420 can be received from the server computing system 430 over network 480, stored in the user computing device memory 414, and then used or otherwise implemented by the one or more processors 412. In some implementations, the user computing device 402 can implement multiple parallel instances of a single speech recognition model 420 (e.g., to perform parallel processing across multiple instances of speech recognition).

More particularly, the single speech recognition model 420 maps speech into a text token embedding spaces without speech information loss. This is accomplished by utilizing blank filtering, which is a technique that is used to reduce speech data sequence length to the same order of magnitude as the text token embedding space. The present disclosure also includes a domain-specific retriever to augment the SLM by performing domain-specific retrieval tasks for corner cases that the LLM may not properly handle, such as names for towns or cities, family names, and other unique words that may not be captured in a general LLM.

The speech understanding task requires a model that can simultaneously recognize speech inputs and understand the semantic meaning of the corresponding language. Combining a speech encoder with an LLM helps to enable this process. The speech encoder can be based on a connectionist temporal classification model that can be trained separately from other described models. This speech encoder works optimally on non-blank frames, and therefore it is advantageous to have the blank frames in a speech input removed. The blank frames (or frames having a low likelihood of containing any spoken words) can be filtered out using a variety of filtering techniques. The resulting filtered frames (e.g., only frames containing speech) therefore only provide semantic relevant information from the speech input to the speech encoder, which makes fine-tuning the model easier. Furthermore, reducing the length of the speech input helps with the joint modeling of the speech input and text sequences, because otherwise the speech input is much larger than the text sequence.

A connectionist temporal classification ("CTC") model can be used as a base for the speech encoder for blank filtering. A CTC model is a type of neural network output for training neural networks to handle sequence problems with variable timing. The input is a sequence (e.g., the speech input) and the output is a sequence of labels for each frame of the input sequence, such as "speech" or "blank." The speech encoder can filter out blank frames from the speech input, leaving only a sequence of non-blank frames. The speech encoder can then generate encodings for the remaining non-blank frames.

The present disclosure can also include a speech adapter, which is a model that includes one or more self-attention layers. The speech adapter can map the filtered encodings to text token embeddings within the pre-trained LLM. The text token embeddings can be embeddings generated automatically as a "dialogue" with a request of a user, such as generating "how can I help you" or "what do you need" as a token prompt.

The domain-specific entity retriever's task is to extract a subset of domain-specific entities (such as last names, names of cities, names of restaurants or hotels, or other specific names/language that may not be included in a normal language model) from a list of given domain-specific entities that are relevant to the speech input. The domain-specific entity retriever can include a dual encoder that includes keys that are acoustic encodings (e.g., audio encodings) and values that are the entities mentioned in the speech input. The keys and values can be encoded separately and, in some embodiments, a cosine distance or other distance measure can be determined between the key and a value to determine a measure of similarity between the key and the value. The domain-specific entity retriever can retrieve a subset of K top candidates that are likely domain-specific entities in the speech input and provide this subset of candidates to the SLM for final analysis and output.

The SLM takes the filtered encodings, the text token embeddings, and the subset of candidates into account for determining the content of the speech input. In some embodiments, the retrieved domain-specific entities can be pre-pended to the original text inputs before processing. The SLM can then use, for example, an encoder-decoder or other machine-learned model to process this group of inputs to determine a final transcript of the speech input.

In some embodiments, the SLM can perform dialog state tracking, but instead of tracking written word, the SLM can track spoken word. Dialog state values can be inferred turn-by-turn in an auto-regressive fashion by providing turn (i) as speech input and illustrating the dialog history from turn (1) to turn (i) as text input. The SLM can simultaneously recognize words spoken in turn (i) along with the dialog states in one output string, and the transcript from each turn can be incrementally collated to create a dialog history for subsequent turns.

Additionally or alternatively, one or more speech recognition models 440 can be included in or otherwise stored and implemented by the server computing system 430 that communicates with the user computing device 402 according to a client-server relationship. For example, the speech recognition models 440 can be implemented by the server computing system 440 as a portion of a web service (e.g., a speech recognition service). Thus, one or more models 420 can be stored and implemented at the user computing device 402 and/or one or more models 440 can be stored and implemented at the server computing system 430.

The user computing device 402 can also include one or more user input components 422 that receives user input. For example, the user input component 422 can be a touch-sensitive component (e.g., a touch-sensitive display screen or a touch pad) that is sensitive to the touch of a user input object (e.g., a finger or a stylus). The touch-sensitive component can serve to implement a virtual keyboard. Other example user input components include a microphone, a traditional keyboard, or other means by which a user can provide user input.

The server computing system 430 includes one or more processors 432 and a memory 434. The one or more processors 432 can be any suitable processing device (e.g., a processor core, a microprocessor, an ASIC, an FPGA, a controller, a microcontroller, etc.) and can be one processor or a plurality of processors that are operatively connected. The memory 434 can include one or more non-transitory computer-readable storage media, such as RAM, ROM, EEPROM, EPROM, flash memory devices, magnetic disks, etc., and combinations thereof. The memory 434 can store data 436 and instructions 438 which are executed by the processor 432 to cause the server computing system 430 to perform operations.

In some implementations, the server computing system 430 includes or is otherwise implemented by one or more server computing devices. In instances in which the server computing system 430 includes plural server computing devices, such server computing devices can operate according to sequential computing architectures, parallel computing architectures, or some combination thereof.

As described above, the server computing system 430 can store or otherwise include one or more speech recognition models 440. For example, the models 440 can be or can otherwise include various machine-learned models. Example machine-learned models include neural networks or other multi-layer non-linear models. Example neural networks include feed forward neural networks, deep neural networks, recurrent neural networks, and convolutional neural networks. Some example machine-learned models can leverage an attention mechanism such as self-attention. For example, some example machine-learned models can include multi-headed self-attention models (e.g., transformer models). Example models 440 are discussed with reference to Figures 1-2.

The user computing device 402 and/or the server computing system 430 can train the models 420 and/or 440 via interaction with the training computing system 450 that is communicatively coupled over the network 480. The training computing system 450 can be separate from the server computing system 430 or can be a portion of the server computing system 430.

The training computing system 450 includes one or more processors 452 and a memory 454. The one or more processors 452 can be any suitable processing device (e.g., a processor core, a microprocessor, an ASIC, an FPGA, a controller, a microcontroller, etc.) and can be one processor or a plurality of processors that are operatively connected. The memory 454 can include one or more non-transitory computer-readable storage media, such as RAM, ROM, EEPROM, EPROM, flash memory devices, magnetic disks, etc., and combinations thereof. The memory 454 can store data 456 and instructions 458 which are executed by the processor 452 to cause the training computing system 450 to perform operations. In some implementations, the training computing system 450 includes or is otherwise implemented by one or more server computing devices.

The training computing system 450 can include a model trainer 460 that trains the machine-learned models 420 and/or 440 stored at the user computing device 402 and/or the server computing system 430 using various training or learning techniques, such as, for example, backwards propagation of errors. For example, a loss function can be backpropagated through the model(s) to update one or more parameters of the model(s) (e.g., based on a gradient of the loss function). Various loss functions can be used such as mean squared error, likelihood loss, cross entropy loss, hinge loss, and/or various other loss functions. Gradient descent techniques can be used to iteratively update the parameters over a number of training iterations.

In some implementations, performing backwards propagation of errors can include performing truncated backpropagation through time. The model trainer 460 can perform a number of generalization techniques (e.g., weight decays, dropouts, etc.) to improve the generalization capability of the models being trained.

In particular, the model trainer 460 can train the speech recognition models 420 and/or 440 based on a set of training data 462. The training data 462 can include, for example, any suitable speech inputs and associated transcripts.

The speech adapter can be trained using any suitable method for training a speech recognition model, where the input is speech and the output is a corresponding transcript of the speech. In some embodiments, the speech adapter can be trained with the text input being unused and/or with both speech and language model weights being frozen during the training process.

In some embodiments, the domain-specific entity retriever can be trained using a specific set of entities associated with the domain, and in-batch negatives can be used as negative targets during training to optimize a contrastive loss.

In some implementations, if the user has provided consent, the training examples can be provided by the user computing device 402. Thus, in such implementations, the model 420 provided to the user computing device 402 can be trained by the training computing system 450 on user-specific data received from the user computing device 402. In some instances, this process can be referred to as personalizing the model.

The model trainer 460 includes computer logic utilized to provide desired functionality. The model trainer 460 can be implemented in hardware, firmware, and/or software controlling a general purpose processor. For example, in some implementations, the model trainer 460 includes program files stored on a storage device, loaded into a memory and executed by one or more processors. In other implementations, the model trainer 460 includes one or more sets of computer-executable instructions that are stored in a tangible computer-readable storage medium such as RAM, hard disk, or optical or magnetic media.

The network 480 can be any type of communications network, such as a local area network (e.g., intranet), wide area network (e.g., Internet), or some combination thereof and can include any number of wired or wireless links. In general, communication over the network 480 can be carried via any type of wired and/or wireless connection, using a wide variety of communication protocols (e.g., TCP/IP, HTTP, SMTP, FTP), encodings or formats (e.g., HTML, XML), and/or protection schemes (e.g., VPN, secure HTTP, SSL).

The machine-learned models described in this specification may be used in a variety of tasks, applications, and/or use cases.

In some implementations, the input to the machine-learned model(s) of the present disclosure can be text or natural language data. The machine-learned model(s) can process the text or natural language data to generate an output. As an example, the machine-learned model(s) can process the natural language data to generate a language encoding output. As another example, the machine-learned model(s) can process the text or natural language data to generate a latent text embedding output. As another example, the machine-learned model(s) can process the text or natural language data to generate a translation output. As another example, the machine-learned model(s) can process the text or natural language data to generate a classification output. As another example, the machine-learned model(s) can process the text or natural language data to generate a textual segmentation output. As another example, the machine-learned model(s) can process the text or natural language data to generate a semantic intent output. As another example, the machine-learned model(s) can process the text or natural language data to generate an upscaled text or natural language output (e.g., text or natural language data that is higher quality than the input text or natural language, etc.). As another example, the machine-learned model(s) can process the text or natural language data to generate a prediction output.

In some implementations, the input to the machine-learned model(s) of the present disclosure can be speech data. The machine-learned model(s) can process the speech data to generate an output. As an example, the machine-learned model(s) can process the speech data to generate a speech recognition output. As another example, the machine-learned model(s) can process the speech data to generate a speech translation output. As another example, the machine-learned model(s) can process the speech data to generate a latent embedding output. As another example, the machine-learned model(s) can process the speech data to generate an encoded speech output (e.g., an encoded and/or compressed representation of the speech data, etc.). As another example, the machine-learned model(s) can process the speech data to generate an upscaled speech output (e.g., speech data that is higher quality than the input speech data, etc.). As another example, the machine-learned model(s) can process the speech data to generate a textual representation output (e.g., a textual representation of the input speech data, etc.). As another example, the machine-learned model(s) can process the speech data to generate a prediction output.

In some implementations, the input to the machine-learned model(s) of the present disclosure can be latent encoding data (e.g., a latent space representation of an input, etc.). The machine-learned model(s) can process the latent encoding data to generate an output. As an example, the machine-learned model(s) can process the latent encoding data to generate a recognition output. As another example, the machine-learned model(s) can process the latent encoding data to generate a reconstruction output. As another example, the machine-learned model(s) can process the latent encoding data to generate a search output. As another example, the machine-learned model(s) can process the latent encoding data to generate a reclustering output. As another example, the machine-learned model(s) can process the latent encoding data to generate a prediction output.

In some cases, the input includes audio data representing a spoken utterance and the task is a speech recognition task. The output may comprise a text output which is mapped to the spoken utterance. In some cases, the task comprises encrypting or decrypting input data. In some cases, the task comprises a microprocessor performance task, such as branch prediction or memory address translation.

Figure 4A illustrates one example computing system that can be used to implement the present disclosure. Other computing systems can be used as well. For example, in some implementations, the user computing device 402 can include the model trainer 460 and the training dataset 162. In such implementations, the models 420 can be both trained and used locally at the user computing device 402. In some of such implementations, the user computing device 402 can implement the model trainer 460 to personalize the models 420 based on user-specific data.

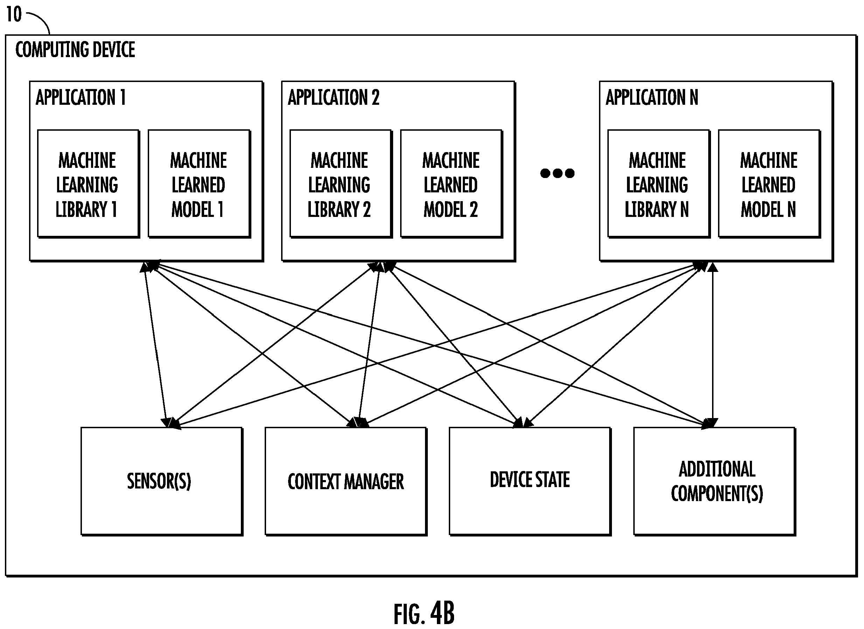

Figure 4B depicts a block diagram of an example computing device 10 that performs according to example embodiments of the present disclosure. The computing device 10 can be a user computing device or a server computing device.

The computing device 10 includes a number of applications (e.g., applications 1 through N). Each application contains its own machine learning library and machine-learned model(s). For example, each application can include a machine-learned model. Example applications include a text messaging application, an email application, a dictation application, a virtual keyboard application, a browser application, etc.

As illustrated in Figure 4B, each application can communicate with a number of other components of the computing device, such as, for example, one or more sensors, a context manager, a device state component, and/or additional components. In some implementations, each application can communicate with each device component using an API (e.g., a public API). In some implementations, the API used by each application is specific to that application.

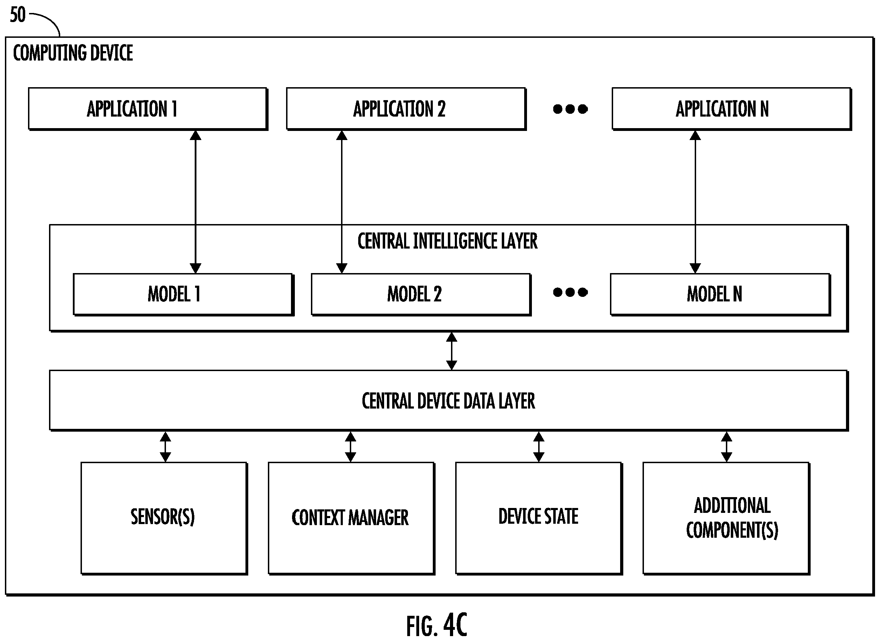

Figure 4C depicts a block diagram of an example computing device 50 that performs according to example embodiments of the present disclosure. The computing device 50 can be a user computing device or a server computing device.

The computing device 50 includes a number of applications (e.g., applications 1 through N). Each application is in communication with a central intelligence layer. Example applications include a text messaging application, an email application, a dictation application, a virtual keyboard application, a browser application, etc. In some implementations, each application can communicate with the central intelligence layer (and model(s) stored therein) using an API (e.g., a common API across all applications).

The central intelligence layer includes a number of machine-learned models. For example, as illustrated in Figure 4C, a respective machine-learned model can be provided for each application and managed by the central intelligence layer. In other implementations, two or more applications can share a single machine-learned model. For example, in some implementations, the central intelligence layer can provide a single model for all of the applications. In some implementations, the central intelligence layer is included within or otherwise implemented by an operating system of the computing device 50.

The central intelligence layer can communicate with a central device data layer. The central device data layer can be a centralized repository of data for the computing device 50. As illustrated in Figure 4C, the central device data layer can communicate with a number of other components of the computing device, such as, for example, one or more sensors, a context manager, a device state component, and/or additional components. In some implementations, the central device data layer can communicate with each device component using an API (e.g., a private API).

### Additional Disclosure

The technology discussed herein makes reference to servers, databases, software applications, and other computer-based systems, as well as actions taken and information sent to and from such systems. The inherent flexibility of computer-based systems allows for a great variety of possible configurations, combinations, and divisions of tasks and functionality between and among components. For instance, processes discussed herein can be implemented using a single device or component or multiple devices or components working in combination. Databases and applications can be implemented on a single system or distributed across multiple systems. Distributed components can operate sequentially or in parallel.

While the present subject matter has been described in detail with respect to various specific example embodiments thereof, each example is provided by way of explanation, not limitation of the disclosure. Those skilled in the art, upon attaining an understanding of the foregoing, can readily produce alterations to, variations of, and equivalents to such embodiments. Accordingly, the subject disclosure does not preclude inclusion of such modifications, variations and/or additions to the present subject matter as would be readily apparent to one of ordinary skill in the art. For instance, features illustrated or described as part of one embodiment can be used with another embodiment to yield a still further embodiment. Thus, it is intended that the present disclosure cover such alterations, variations, and equivalents.

This specification also includes the following clauses:
Clause 1: A computer-implemented method for recognizing speech, the method comprising: performing, by a processor, blank filtering on a received speech input to generate a plurality of filtered encodings; processing, by the processor, the plurality of filtered encodings to generate a plurality of audio embeddings; mapping, by the processor, each audio embedding of the plurality of audio embeddings to a textual embedding using a speech adapter to generate a plurality of combined embeddings; providing, by the processor, the plurality of combined embeddings and the one to a machine-learned model; and receiving, by the processor, a textual output from the machine-learned model.
Clause 2: The computer-implemented method of clause 1, wherein performing blank filtering comprises removing one or more frames from the speech input that do not include speech to generate the plurality of filtered encodings.
Clause 3: The computer-implemented method of clause 1, wherein the plurality of filtered encodings are generated in part using a connectionist temporal classification model.
Clause 4: The computer-implemented method of clause 1, wherein the speech adapter is trained using speech as an input and a predicted transcript as an output.
Clause 5: The computer-implemented method of clause 4, wherein a text input portion of the connectionist temporal classification model is unused during training.
Clause 6: The computer-implemented method of clause 1, further comprising: receiving, by the processor, one or more specific textual embeddings from a domain-specific entity retriever based on the plurality of filtered encodings; wherein the domain-specific entity retriever is a dual encoder model that comprises keys and values, wherein the keys are acoustic encodings and the values are domain-specific entities.
Clause 7: The computer-implemented method of clause 6, wherein the domain-specific entity retriever is trained using entities mentioned in a reference transcript of the speech input.
Clause 8: The computer-implemented method of clause 6, wherein the plurality of filtered embeddings are provided to the domain-specific entity retriever as the acoustic encodings.
Clause 9: The computer-implemented method of clause 6, wherein the keys and the values are encoded separately and a cosine distance between an encoded key and its respective encoded value is determined to measure a similarity between the encoded key and its respective encoded value.
Clause 10: The computer-implemented method of clause 9, wherein the one or more specific textual embeddings are determined based on at least one cosine distance determined between a first encoded key and a first respective encoded value.
Clause 11: The computer-implemented method of clause 1, wherein providing the plurality of combined embeddings and the one or more specific textual embeddings to the machine-learned model comprises prepending the one or more specific textual embeddings to one or more combined embeddings of the plurality of combined embeddings before the machine-learning model processes the plurality of combined embeddings and the one or more specific textual embeddings.
Clause 12: A computing system for recognizing speech, the computing system comprising: one or more processors; and a non-transitory, computer-readable medium comprising instructions that, when executed by the one or more processors, cause the one or more processors to perform operations, the operations comprising: performing blank filtering on a received speech input to generate a plurality of filtered encodings; processing the plurality of filtered encodings to generate a plurality of audio embeddings; mapping each audio embedding of the plurality of audio embeddings to a textual embedding using a speech adapter; to generate a plurality of combined encodings; receiving one or more specific textual embeddings from a domain-specific entity retriever based on the plurality of filtered encodings; providing the plurality of combined embeddings and the one or more specific textual embeddings to a machine-learned model; and receiving a textual output representing speech from the speech input from the machine-learned model.
Clause 13: The computing system of clause 12, wherein performing blank filtering comprises removing one or more frames from the speech input that do not include speech to generate the plurality of filtered encodings.
Clause 14: The computing system of clause 12, wherein the plurality of filtered encodings are generated in part using a connectionist temporal classification model.
Clause 15: The computing system of clause 12, wherein the domain-specific entity retriever is a dual encoder model that comprises keys and values, wherein the keys are acoustic encodings and the values are domain-specific entities.
Clause 16: The computing system of clause 15, wherein the keys and the values are encoded separately and a cosine distance between an encoded key and its respective encoded value is determined to measure a similarity between the encoded key and its respective encoded value.
Clause 17: A non-transitory, computer-readable medium comprising instructions that, when executed by one or more processors, cause the one or more processors to perform operations, the operations comprising: performing blank filtering on a received speech input to generate a plurality of filtered encodings; processing the plurality of filtered encodings to generate a plurality of audio embeddings; mapping each audio embedding of the plurality of audio embeddings to a textual embedding using a speech adapter to generate a plurality of combined embeddings; receiving one or more specific textual embeddings from a domain-specific entity retriever based on the plurality of filtered encodings; providing the plurality of combined embeddings and the one or more specific textual embeddings to a machine-learned model; and receiving a textual output representing speech from the speech input from the machine-learned model.
Clause 18: The non-transitory, computer-readable medium of clause 17, wherein the plurality of filtered encodings are generated in part using a connectionist temporal classification model.
Clause 19: The non-transitory, computer-readable medium of clause 17, wherein the domain-specific entity retriever is a dual encoder model that comprises keys and values, wherein the keys are acoustic encodings and the values are domain-specific entities.
Clause 20: The non-transitory, computer-readable medium of clause 19, wherein the keys and the values are encoded separately and a cosine distance between an encoded key and its respective encoded value is determined to measure a similarity between the encoded key and its respective encoded value.

## Claims

1. A computer-implemented method for recognizing speech, the method comprising:
performing, by a processor, blank filtering on a received speech input to generate a plurality of filtered encodings;
processing, by the processor, the plurality of filtered encodings to generate a plurality of audio embeddings;
mapping, by the processor, each audio embedding of the plurality of audio embeddings to a textual embedding using a speech adapter to generate a plurality of combined embeddings;
providing, by the processor, the plurality of combined embeddings and the one to a machine-learned model; and
receiving, by the processor, a textual output from the machine-learned model.

2. The computer-implemented method of claim 1, wherein performing blank filtering comprises removing one or more frames from the speech input that do not include speech to generate the plurality of filtered encodings.

3. The computer-implemented method of any of claims 1 or 2, wherein the plurality of filtered encodings are generated in part using a connectionist temporal classification model.

4. The computer-implemented method of any preceding claim, wherein the speech adapter is trained using speech as an input and a predicted transcript as an output.

5. The computer-implemented method of claim 4, wherein a text input portion of the connectionist temporal classification model is unused during training.

6. The computer-implemented method of any preceding claim, further comprising:
receiving, by the processor, one or more specific textual embeddings from a domain-specific entity retriever based on the plurality of filtered encodings;
wherein the domain-specific entity retriever is a dual encoder model that comprises keys and values, wherein the keys are acoustic encodings and the values are domain-specific entities.

7. The computer-implemented method of claim 6, wherein the domain-specific entity retriever is trained using entities mentioned in a reference transcript of the speech input.

8. The computer-implemented method of any of claims 6 or 7, wherein the plurality of filtered embeddings are provided to the domain-specific entity retriever as the acoustic encodings.

9. The computer-implemented method of any of claims 6 to 8, wherein the keys and the values are encoded separately and a cosine distance between an encoded key and its respective encoded value is determined to measure a similarity between the encoded key and its respective encoded value.

10. The computer-implemented method of claim 9, wherein the one or more specific textual embeddings are determined based on at least one cosine distance determined between a first encoded key and a first respective encoded value.

11. The computer-implemented method of any preceding claim, wherein providing the plurality of combined embeddings and the one or more specific textual embeddings to the machine-learned model comprises prepending the one or more specific textual embeddings to one or more combined embeddings of the plurality of combined embeddings before the machine-learning model processes the plurality of combined embeddings and the one or more specific textual embeddings.

12. A computing system for recognizing speech, the computing system comprising:
one or more processors; and
a non-transitory, computer-readable medium comprising instructions that, when executed by the one or more processors, cause the one or more processors to perform operations, the operations comprising a method according to any of preceding claim.

13. A computer program product comprising computer readable instructions that, when executed by one or more processors, cause the one or more processors to perform operations, the operations comprising a method according to any of claims 1 to 11.
